# EUROPEAN PATENT APPLICATION

(11) **EP 1 273 233 A1**
(43) Date of publication of application: **08.01.2003**
(21) Application number: 02077635.7
(22) Date of filing: 03.07.2002
(51) Int. Cl.: A01N 43/88

(54) **Preservative formulations comprising an oxathiazine and alkoxylated amines**

(71) Applicant: JANSSEN PHARMACEUTICA N.V., 2340 Beerse (BE)
(72) Inventor: Van der Flaas, Mark Arthur Josepha, 2340 Beerse (BE)

(57) **Abstract**

The present invention relates to the use of alkoxylated amines to enhance the activity of fungicidal formulations comprising a fungicidal oxathiazine compound which is bethoxazin. It also relates to formulations comprising an oxathiazine compound and alkoxylated amines. These formulations are useful for the protection of objects made of wood, thatch or the like, biodegradable material and textiles against deterioration due to the action of fungi.

## Description

The present invention relates to the use of alkoxylated amines to enhance the activity of fungicidal formulations comprising a fungicidal oxathiazine compound. It also relates to formulations comprising an oxathiazine compound and alkoxylated amines. These formulations are useful for the protection of objects made of wood, thatch or the like, biodegradable material and textiles against deterioration due to the action of fungi.

Oxathiazines, and their use as herbicides, fungicides, plant dessicants and defoliants, are described in EP-0,104,940. Other oxathiazines are described in WO-95/06043 as bactericidal and fungicidal compounds useful in wood-protection. WO-95/05739 describes the antibacterial, anti-yeast, antifungal, algicidal, anti-crustacean and molluscicidal properties of oxathiazines and their use for anti-fouling purposes. One of the oxathiazines is bethoxazin which is the ISO name of the compound 3-(benzo[b]thien-2-yl)-5,6-dihydro-1,4,2-oxathiazine 4-oxide, which compound may be represented by the formula

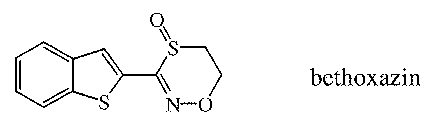

Wood preservative formulations comprising in synergistic proportions an oxathiazine compound and one or more of a quaternary ammonium compound and a triazole compounds have been described in WO-00/32371.

WO-96/10332 discloses liquid wood preservation formulations comprising complexes formed by reacting a copper cation and an alkoxylated diamines.

JP-61-151102 discloses the use of alkoxylated diamines for stabilizing formulations comprising 1*H*-1,2,4-triazole-1-ethanimidothioic acid fungicides such as imibenconazole.

As with most individual active ingredients, fungicidal oxathiazine compounds such as bethoxazin by themselves do not provide protection against all fungi, bacteria, and other microorganisms which it is desirous to protect objects made of wood, thatch or the like, biodegradable material and textiles against.

Surprisingly, it has been found that by addition of alkoxylated amines of formula (I), the efficacy of formulations comprising oxathiazine compounds, such as for example bethoxazin, is significantly increased. Therefore the fungicidal formulations of the present invention comprise an oxathiazine compounds such as bethoxazin and alkoxylated amines of formula (I) to increase the efficacy or performance, and a carrier.

According to one aspect of the present invention, fungicidal compositions are provided comprising, within certain broad limits of composition (*i.e.* in certain respective proportions or amounts of the active ingredients) easily determinable by those skilled in the art, the combination of an oxathiazine compounds such as bethoxazin and alkoxylated amines of formula (I) in synergistic proportions, and a carrier.

The oxathiazine compounds such as bethoxazin may be present in their base form or in a salt form, the latter being obtained by reaction of the base form with an appropriate acid. Appropriate acids comprise, for example, inorganic acids, such as the hydrohalic acids, *i.e.* hydrofluoric, hydrochloric, hydrobromic and hydroiodic, sulfuric acid, nitric acid, phosphoric acid, phosphinic acid and the like; or organic acids, such as, for example, acetic, propanoic, hydroxyacetic, 2-hydroxypropanoic, 2-oxopropanoic, ethanedioic, propanedioic, butanedioic, (Z)-2-butenedioic, (E)-2-butenedioic, 2-hydroxybutanedioic, 2,3-dihydroxybutanedioic, 2-hydroxy-1,2,3-propanetricarboxylic, methanesulfonic, ethanesulfonic, benzenesulfonic, 4-methylbenzenesulfonic, cyclohexanesulfamic, 2-hydroxybenzoic, 4-amino-2-hydroxybenzoic and the like acids.

Wherever the term "an oxathiazine", "an oxathiazine compound", "a fungicidal oxathiazine" or "bethoxazin" is used, it is meant to include said compound both in its base or in its salt form, the latter being obtained by reaction of the base form with an appropriate acid. The term salt form as used hereinabove also comprises the solvates which the oxathiazine compounds are able to form. Examples of such solvates are e.g., the hydrates, alcoholates and the like.

The alkoxylated amines of formula (I) have the following general formula 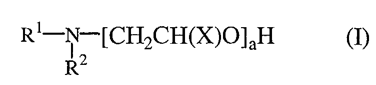 wherein
R¹ is a C₈₋₂₀alkyl;
R² is

   -[CH₂CH(X)O]_{b}H (a-1)

   or 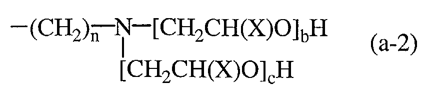
n is an integer from 1 to 4;
each a, b, and c independently are integers which can be 1 to 20;
each X independently is selected from the group consisting of hydrogen, methyl, ethyl, and phenyl.

A group of interesting compounds of formula (I) are those compounds of formula (I) wherein each a, b, and c independently are integers which can be 1 to 6.

A first particular group of alkoxylated amines of formula (I) are those compounds of formula (I) wherein R² represents radical (a-1).

A second particular group of alkoxylated amines of formula (I) are those compounds of formula (I) wherein R² represents radical (a-2).

More particular alkoxylated amines of formula (I) are those alkoxylated amines of formula (I) wherein one or more of the following restrictions apply :
a) n is an integer 2 or 3, preferably n is 3;
b) X is hydrogen;
c) R is a C₁₀₋₂₀alkyl, preferably cocoalkyl or tallowalkyl.

Preferred alkoxylated amines of formula (I) are listed in the following table :

| Product name | Chemical name | CAS number |
|---|---|---|
| Propoduomeen C/13 | N,N',N'-tris(2-hydroxypropyl)-N-cocoalkyl-1,3-diaminopropane | - |
| Ethoduomeen T/11 | mono-(2-hydroxyethyl)-N-tallowalkyl-1,3-diaminopropane | 61790-85-0 |
| Ethoduomeen T/13 | N,N',N'-tris-(2-hydroxyethyl)-N-tallowalkyl-1,3-diaminopropane | 90367-27-4 |
| Ethoduomeen T/25 | N,N',N'-polyoxyethylene(15)-N-tallowalkyl-1,3-diaminopropane | 61790-85-0 |
| Ethoduomeen C/13 | N,N',N'-tris(2-hydroxyethyl)-N-cocoalkyl-1,3-diamino-propane | 90367-21-8 |

Most preferred alkoxylated amine of formula (I) is N,N',N'-tris(2-hydroxyethyl)-N-cocoalkyl-1,3-diamino-propane.

The relative proportions of an oxathiazine compound such as bethoxazin and alkoxylated amines of formula (I) in the embodied fungicidal compositions are those proportions which result in unexpected enhanced efficacy, preferably synergistic, against fungi, when compared to a composition including, as an active ingredient, either an oxathiazine alone or alkoxylated amines of formula (I) alone. As will readily be understood by those skilled in the art, the said enhanced efficacy may be obtained within various proportions of an oxathiazine compound and alkoxylated amines of formula (I) in the fungicidal composition, depending on the kind of fungus towards which efficacy is measured and the substrate to be treated. As a general rule, however, it may be said that for most fungi the suitable proportions by weight of the amount of a fungicidal oxathiazine compound to alkoxylated amines of formula (I) in the active composition should lie in the range from 5:1 to 1:50, preferably from 2:1 to 1:20, more preferably from 1:1 to 1:10.

The amount of each of the active ingredients, *i.e.* an oxathiazine compound and alkoxylated amines, in the compositions according to the present invention will be so that an effective fungicidal effect is obtained. In particular it is contemplated that the ready-to-use compositions of the present invention comprise an oxathiazine compound in a range from 0.01% (w/v) to 10% (w/v), preferably from 0.1% (w/v) to 1.5% (w/v). Alkoxylated amines of formula (I) in such ready-to-use compositions are present in a range from 0.1% (w/v) to 40% (w/v), preferably from 0.5% (w/v) to 10% (w/v). Said ready-to-use compositions may be obtained by diluting a concentrated composition with an appropriate diluent such as e.g. water.

The fungicidal compositions of the present invention are useful in the preservation of wood, wood products, and biodegradable materials and protect said materials against fungal attack and destruction. As wood or wood products which can be preserved with the fungicidal compositions according to the present invention is considered, for example, wood products such as timber, lumber, railway sleepers, telephone poles, fences, wood coverings, wicker-work, windows and doors, plywood, particle board, waferboards, chipboard, joinery, timber used above ground in exposed environments such as decking and timber used in ground contact or fresh water or salt water environments, bridges or wood products which are generally used in housebuilding, construction and carpentry. As biodegradable materials besides wood which can benefit from treatment with the formulations of the invention include cellulosic material such as cotton. Also, leather, textile materials and even synthetic fibres, hessian, rope and cordage.

Wood which is preserved from staining, discoloring and decay is meant to be protected from for example, moulding, rotting, loss of its useful mechanical properties such as breaking strength, resistance to shock and shearing strength, or decrease of its optical or other useful properties due to the occurrence of odour, staining and spot formation. These phenomena are caused by a number of micro-organisms of which the following are typical examples :

| Wood-discoloring fungi: | |
|---|---|
| 1: Ascomycetes | *Ceratocystis* e.g. *Ceratocystis minor.* |
| | *Aureobasidium* e.g. *Aureobasidium pullulans* |
| | *Sclerophoma* e.g. *Sclerophoma pithyophila* |
| | *Cladosporium* e.g. *Cladosporium herbarum* |
| 2: Deuteromycetes | *Fungi imperfecti* |
| | *Aspergillus* e.g. *Aspergillus niger* |
| | *Dactylium* e.g. *Dactylium fusarioides* |
| | *Penicillium* e.g. *P. brevicaule, P. variabile, P. funiculosum* or *P. glaucum* |
| | *Scopularia* e.g. *Scopularia phycomyces* |
| | *Trichoderma* e.g. *Trichoderma viride* or *Trichoderma lignorum.* |
| | *Alternaria* e.g. *Alternaria tenius, Alternaria alternata* |
| 3: Zygomycetes | *Mucor* e.g. *Mucor spinorus.* |

| Wood-destroying fungi | |
|---|---|
| 1: Soft-rot Fungi | *Chaetomium* e.g. *Ch. globosum* or *Ch. alba-arenulum* |
| | *Humicola* e.g. *Humicola grisea* |
| | *Petriella* e.g. *Petriella setifera* |
| | *Trichurus* e.g. *Trichurus spiralis.* |
| 2: White and brown rot Fungi | *Coniophora* e.g. *Coniophora puteana* |
| | *Coriolus* e.g. *Coriolus versicolor* |
| | *Donkioporia* e.g. *Donkioporia expansa* |
| | *Glenospora* e.g. *Glenospora graphii* |
| | *Gloeophyllum* e.g. *Gl. abietinum, Gl. adoratum, Gl. protactum,* |
| | *Gl. sepiarium* or *Gl. trabeum* |
| | *Lentinus* e.g. *L. cyathiformes, L. edodes, L. lepideus, L. grinus* or *L. squarrolosus* |
| | *Paxillus* e.g. *Paxillus panuoides* |
| | *Pleurotus* e.g. *Pleurotis ostreatus* |
| | *Poria* e.g. *P. monticola, P. placenta, P. vaillantii* or *P. vaporaria* |
| | *Serpula* (*Merulius*) e.g. *Serpula himantoides* or *Serpula lacrymans* |
| | *Stereum* e.g. *Stereum hirsutum* |
| | *Trychophyton* e.g. *Trychophyton mentagrophytes* |
| | *Tyromyces* e.g. *Tyromyces palustris.* |

In order to protect wood from decay it is treated with a fungicidal composition of the present invention. Such treatment is applied by several different procedures such as, for example, by treating the wood in closed pressure or vacuum systems, in thermal or dip systems and the like, or by a wide variety of surface treatments, e.g. by spraying, atomizing, dusting, scattering, pouring, brushing, dipping, soaking or impregnating the wood with a fungicidal composition of the present invention.

The present invention provides a method of preserving wood, wood products or biodegradable materials which comprises applying to said wood, wood products or biodegradable materials a fungicidal composition comprising an oxathiazine compound such as e.g. bethoxazin, alkoxylated amines of formula (I), and a carrier. In a further aspect a method is provided of preserving wood, wood products or biodegradable materials which comprises applying to said wood, wood products or biodegradable materials a fungicidal composition comprising the combination of an oxathiazine compound and alkoxylated amines of formula (I) in synergistic proportions, and a carrier.

Compositions comprising an oxathiazine compound and alkoxylated amines, may also be used in a variety of other applications :
- industrial aqueous process fluids, e.g. cooling waters, pulp and paper mill process waters and suspensions, secondary oil recovery systems, spinning fluids, metal working fluids, and the like
- in-tank/in-can protection of aqueous functional fluids, e.g. polymer emulsions, water based paints and adhesives, glues, starch slurries, thickener solutions, gelatine, wax emulsions, inks, polishes, pigment and mineral slurries, rubber latexes, concrete additives, drilling muds, toiletries, aqueous cosmetic formulations, pharmaceutical formulations, and the like.

The fungicidal compositions of the present invention comprise an oxathiazine compound and alkoxylated amines of formula (I), and a carrier. These carriers are any material or substance with which said fungicidal compositions are formulated in order to facilitate their application/dissemination to the locus to be treated, for instance by dissolving, dispersing, or diffusing the said compositions, and/or to facilitate their storage, transport or handling without imparing their antifungal effectiveness. Said acceptable carriers may be a solid or a liquid or a gas which has been compressed to form a liquid, *i.e*. the compositions of this invention can suitably be used as concentrates, emulsions, solutions, granulates, dusts, sprays, aerosols, pellets, or powders. In many instances the fungicidal compositions of the present invention to be used directly can be obtained from concentrates, such as e.g. emulsifiable concentrates, suspension concentrates, or soluble concentrates, upon dilution with aqueous or organic media, such concentrates being intended to be covered by the term composition as used in the definitions of the present invention. Such concentrates can be diluted to a ready to use mixture in a spray tank shortly before use. Preferably the compositions of the invention should contain from about 0.01 to 95% by weight of the combination of an oxathiazine compound and alkoxylated amines of formula (I). More preferably this range is from 0.1 to 90% by weight. Most preferably this range is from 1 to 80% by weight, depending on the type of formulation to be selected for specific purposes.

An emulsifiable concentrate is a liquid, homogeneous formulation to be applied as an emulsion after dilution in water. A suspension concentrate is a stable suspension of the active ingredients in a fluid intended for dilution with water before use. A soluble concentrate is a liquid, homogeneous formulation to be applied as a true solution of the active ingredients after dilution in water.

The compositions of the present invention may further comprise other adjuvants as known to the skilled person, such as, for example drying oils, anti-oxidants, UV absorbers, natural or regenerated mineral substances, solvents, dispersants, surfactants, wetting agents, adhesives, thickeners, binders, pigments or anti-freeze agents.

The compositions of the present invention may optionally further comprise quaternary ammonium salts such as quaternary ammonium salts of the trimethyl alkyl ammonium halide type, e.g. trimethyl decyl ammonium chloride, trimethyl dodecylammonium chloride, trimethyl tallow ammonium chloride, trimethyl oleyl ammonium chloride; or of the dimethyl alkyl benzyl ammonium type, e.g. dimethyl decyl benzyl ammonium chloride, dimethyldodecyl benzyl ammonium chloride, dimethyl hexadecylbenzyl ammonium chloride (commonly designated as "cetalkonium chloride"), dimethyl octadecyl benzyl ammonium chloride, dimethyl coco benzyl ammonium chloride, dimethyl tallow benzyl ammonium chloride; and particularly the dimethyl C₈₋₁₈alkyl benzyl ammonium chloride mixture which is commonly known as "benzalkonium chloride"; dimethyl dialkyl ammonium halides, e.g. dimethyl dioctyl ammonium chloride, dimethyl didecyl ammonium chloride, dimethyl didodecyl ammonium chloride, dimethyl dicoco ammonium chloride, dimethyl ditallow ammonium chloride, dimethyl octyl decyl ammonium chloride, dimethyl dodecyl octyl ammonium chloride, dimethyl dihydrogenated tallow ammonium chloride.

As already mentioned the compositions of the present invention may further comprise other active ingredients, such as fungicides, bactericides, acaricides, nematocides, insecticides or herbicides, in particular fungicides, for example so as to widen the spectrum of action or to prevent the build up of resistance. In many cases, this results in synergistic effects, *i.e.* the activity of the mixture exceeds the activity of the individual components.

As biocidal agents, which may be used in combination with the fungicidal formulations of the present invention there may be considered products of the following classes :
Fungicides :
   2-aminobutane; 2-anilino-4-methyl-6-cyclopropyl-pyrimidine; 2,6-di-chloro-N-(4-trifluoromethylbenzyl)benzamide; (E)-2-methoxyimino-N-methyl-2-(2-phenoxyphenyl)-acetamide; 8-hydroxyquinoline sulphate; methyl (E)-2-{2-[6-(2-cyanophenoxy)-pyrimidin-4-yloxy]-phenyl }-3-methoxyacrylate; methyl (E)-methoximino[alpha-(o-tolyloxy)-o-tolyl]acetate; 2-phenylphenol (OPP), aldimorph, ampropylfos, anilazine, benalaxyl, benodanil, benomyl, binapacryl, biphenyl, bitertanol, blasticidin-S, bupirimate, buthiobate, calcium polysulphide, captafol, captan, carbendazim, carboxin, quinomethionate, chloroneb, chloropicrin, chlorothalonil, chlozolinate, cufraneb, cymoxanil, cyprofuram, dichlorophen, diclobutrazol, diclofluanid, diclomezin, dicloran, diethofencarb, dimethirimol, dimethomorph, dinocap, diphenylamine, dipyrithion, ditalimfos, dithianon, dodine, drazoxolon, edifenphos, ethirimol, fenarimol, fenfuram, fenitropan, fenpiclonil, fenpropidin, fenpropimorph, fentin acetate, fentin hydroxide, ferbam, ferimzone, fluazinam, fludioxonil, fluoromide, flusulfamide, flutolanil, flutriafol, folpet, fosetyl-aluminium, fthalide, furalaxyl, furmecyclox, guazatine, hexachlorobenzene, hymexazol, imazalil, iminoctadine, iprobenfos (IBP), iprodione, isoprothiolane, kasugamycin, copper preparations such as: copper hydroxide, copper naphthenate, copper oxychloride, copper sulphate, copper oxide, oxine-copper and Bordeaux mixture, mancopper, mancozeb, maneb, mepanipyrim, mepronil, metalaxyl, methasulfocarb, methfuroxam, metiram, metsulfovax, myclobutanil, nickel dimethyldithiocarbamate, nitrothalisopropyl, nuarimol, ofurace, oxadixyl, oxamocarb, oxycarboxin, pefurazoate, pencycuron, phosdiphen, pimaricin, piperalin, polyoxin, prochloraz, procymidone, propamocarb, propineb, pyrazophos, pyrifenox, pyrimethanil, pyroquilon, quintozene (PCNB), sulphur and sulphur preparations, tecloftalam, tecnazene, thiabendazole, thicyofen, thiophanate-methyl, thiram, tolclophos- methyl, tolylfluanid, triadimefon, triadimenol, triazoxide, trichlamide, tridemorph, triflumizole, triforine, validamycin A, vinclozolin, zineb, ziram; isothia- and benzisothiazolone derivatives such as, e.g. 1,2-benzisothiazolone (BIT); fungicidal triazoles such as azaconazole, bromuconazole, cyproconazole, difenoconazole, epoxiconazole, fenbuconazole, fluquinconazole, flusilazole, hexaconazole, ketoconazole, metconazole, penconazole, propiconazole, tebuconazole, tetraconazole, and triticonazole; strobilurines such as azoxystrobin, metominostrobin, pyraclostrobin, kresoxim-methyl, trifloxystrobin, and picoxystrobin.
Bactericides :
   bronopol, dichlorophen, nitrapyrin, nickel dimethyldithiocarbamate, kasugamycin, octhilinone, furanecarboxylic acid, oxytetracyclin, streptomycin, tecloftalam, copper sulphate and other copper preparations.
Insecticides/Acaricides/Nematicides :
   abamectin, AC 303 630, acephate, acrinathrin, alanycarb, aldicarb, alphamethrin, amitraz, avermectin, AZ 60541, azadirachtin, azinphos A, azinphos M, azocyclotin, Bacillus thuringiensis, bendiocarb, benfuracarb, bensultap, beta-cyfluthrin, bifenthrin, BPMC, brofenprox, bromophos A, bufencarb, buprofezin, butocarboxin, butylpyridaben, cadusafos, carbaryl, carbofuran, carbophenothion, carbosulfan, cartap, CGA 157 419, CGA 184699, chloethocarb, chlorethoxyfos chlorfenvinphos, chlorfluazuron, chliormephos, chlorfenapyr, chlorpyrifos, chlorpyrifos M, cis-resmethrin, clocythrin, clofentezine, cyanophos, cycloprothrin, cyfluthrin, cyhalothrin, cyhexatin, cypermethrin, cyromazine, deltamethrin, demeton-M, demeton-S, demeton-S-methyl, diafenthiuron, diazinon, dichlofenthion, dichlorvos, dicliphos, dicrotophos, diethion, diflubenzuron, dimethoate, dimethylvinphos, dioxathion, disulfoton, edifenphos, emamectin, esfenvalerate, ethiofencarb, ethion, ethofenprox, ethoprophos, etrimphos, fenamiphos, fenazaquin, fenbutatin oxide, fenitrothion, fenobucarb, fenothiocarb, fenoxycarb, fenpropathrin, fenpyrad, fenpyroximate, fenthion, fenvalerate, fipronil, fluazinam, flucycloxuron, flucythrinate, flufenoxuron, flufenprox, fluvalinate, fonophos, formothion, fosthiazate, fubfenprox, furathiocarb, HCH, heptenophos, hexaflumuron, hexythiazox, imidacloprid, iprobenfos, isazophos, isofenphos, isoprocarb, isoxathion, ivemectin, lambda-cyhalothrin, lufenuron, malathion, mecarbam, mervinphos, mesulfenphos, metaldehyde, methacrifos, methamidophos, methidathion, methiocarb, methomyl, metolcarb, milbemectin, monocrotophos, moxidectin, naled, NC 184, NI 25, nitenpyram, omethoate, oxamyl, oxydemethon M, oxydeprofos, parathion A, parathion M, permethrin, phenthoate, phorate, phosalone, phosmet, phosphamdon, phoxim, pirimicarb, pirimiphos M, pirimiphos A, profenofos, promecarb, propaphos, propoxur, prothiofos, prothoate, pymetrozin, pyrachlophos, pyridaphenthion, pyresmethrin, pyrethrum, pyridaben, pyrimidifen, pyriproxifen, quinalphos, RH 5992, salithion, sebufos, silafluofen, sulfotep, sulprofos, tebufenozid, tebufenpyrad, tebupirimiphos, teflubenzuron, tefluthrin, temephos, terbam, terbufos, tetrachlorvinphos, thiafenox, thiamethoxam, thiodicarb, thiofanox, thiomethon, thionazin, thuringiensin, tralomethrin, triarathen, triazophos, triazuron, trichlorfon, triflumuron, trimethacarb, vamidothion, XMC, xylylcarb, zetamethrin.

Other biocidal agents that may be used in combination with the compositions of the present invention there may be considered products of the following classes : phenol derivatives such as 3,5-dichlorophenol, 2,5-dichlorophenol, 3,5-dibromophenol, 2,5-dibromophenol, 2,5-(resp. 3,5)-dichloro-4-bromophenol, 3,4,5-trichlorophenol, chlorinated hydrodiphenylethers such as, for example, 2-hydroxy-3,2'4'-trichlorodiphenylether, phenylphenol, 4-chloro-2-phenylphenol, 4-chloro-2-benzylphenol, dichlorophene, hexachlorophene; aldehydes such as formaldehyde, glutaraldehyde, salicylaldehyde; alcohols such as phenoxyethanol; antimicrobially active carboxylic acids and their derivatives; organometallic compounds such as tributyltin compounds; iodine compounds such as iodophores, iodonium compounds; mono-, di- and polyamines such as dodecylamine or 1,10-di(n-heptyl)-1,10-diaminodecane; sulfonium- and phosphonium compounds; mercapto compounds as well as their alkali, earth alkaline and heavy metal salts such as 2-mercaptopyridine-*N*-oxide and its sodium and zinc salt, 3-mercaptopyridazin-2-oxide, 2-mercaptoquinoxaline-1-oxide, 2-mercaptoquinoxaline-di-*N*-oxide, as well as the symmetrical disulfides of said mercapto compounds; ureas such as tribromo- or trichlorocarbanilide, dichlorotrifluoromethyldiphenylurea; tribromosalicylanilide; 2-bromo-2-nitro-1,3-dihydroxypropane; dichlorobenzoxazolon; and chlorohexidine.

The following examples are intended to illustrate and not to limit the scope of the present invention in all its aspects.

### Example 1 : modified EN113 test

Oven dried blocks (40 x 15 x 5 mm) of Scots pine (*Pinus sylvestris*, 504 kg/m³) and beech (*Fagus sylvatica*, 637 kg/m³) were vacuum treated with aqueous dilution of a formulation containing 2% bethoxazin and 18% N,N',N'-tris(2-hydroxyethyl)-N-cocoalkyl-1,3-diamino-propane (*i.e.* ethoduomeen C/13) and stored for two days in a laminar flow cabinet. Depending on the amount of the said aqueous dilution uptaken in the treated blocks the amount of active ingredient, *i.e.* bethoxazin and N,N',N'-tris(2-hydroxyethyl)-N-cocoalkyl-1,3-diamino-propane, can be determined and expressed in g/m³ of uptaken active ingredient (g a.i. /m³).

The sample blocks were placed in contact with the fungi (*Coriolus versicolor, Coniophora puteana* and *Gloeophyllum trabeum*) for 9 weeks at culture conditions promoting growth of the organisms. Blocks were then cleaned form adhering mycelium and their weight measured after oven drying. The difference between the oven dry weight at the start and end of the experiment were used to calculate the weight loss. The weight loss expressed in percentages for blocks treated with a formulation containing 2% bethoxazin and 18% N,N',N'-tris(2-hydroxyethyl)-N-cocoalkyl-1,3-diamino-propane and a formulation containing bethoxazin dissolved in methanol are listed below.

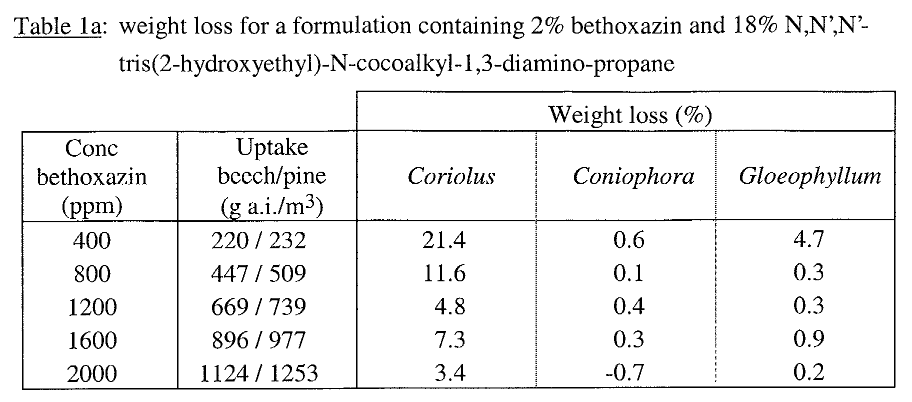

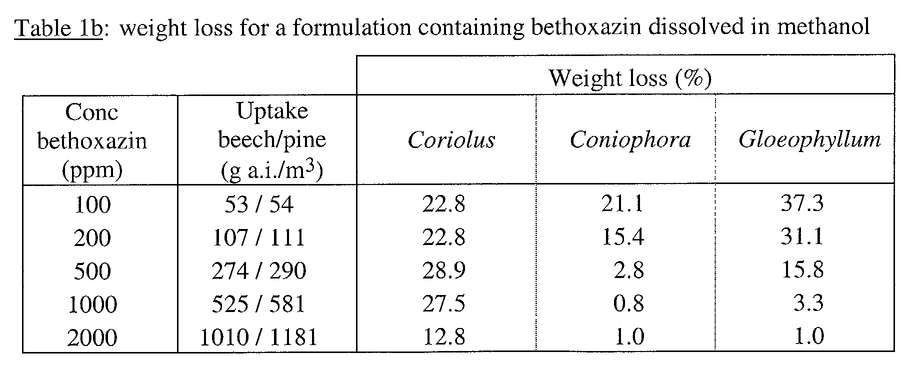

## Claims

1. A fungicidal composition comprising bethoxazin, alkoxylated amines of formula (I) 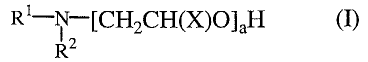 wherein
R¹ is a C₈₋₂₀alkyl;
R² is
-[CH₂CH(X)O]_{b}H (a-1)
or 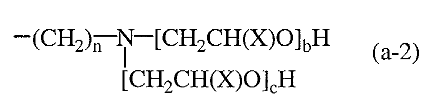
n is an integer from 1 to 4;
each a, b, and c independently are integers which can be 1 to 20;
each X independently is selected from the group consisting of hydrogen, methyl, ethyl, and phenyl;
and a carrier.

2. A composition according to claim 1 wherein R² is a radical formula (a-1).

3. A composition according to claim 1 wherein R² is a radical formula (a-2).

4. A composition according to claim 1 wherein the alkoxylated amine of formula (I) is N,N',N'-tris(2-hydroxyethyl)-N-cocoalkyl-1,3-diamino-propane.

5. A composition according to claim 1 wherein the alkoxylated amine of formula (I) is N,N',N'-tris-(2-hydroxyethyl)-N-tallowalkyl-1,3-diaminopropane.

6. A composition according to any of claims 1 to 5 wherein the ratio of bethoxazin to alkoxylated amines of formula (I) ranges from 5:1 to 1:50, preferably from 2:1 to 1:20.

7. Use of alkoxylated amines of formula (I) as defined in claim 1 to enhance the activity of fungicidal compositions comprising bethoxazin.

8. Use according to claim 7 wherein the alkoxylated amine of formula (I) is N,N',N'-tris(2-hydroxyethyl)-N-cocoalkyl-1,3-diamino-propane.

9. A process for preparing a composition as claimed in any of claims 1 to 6, **characterized in that** bethoxazin and the alkoxylated amines of formula (I) are intimately mixed with the carrier.

10. A method of preserving wood, wood products or biodegradable materials which comprises applying to the wood, wood products or biodegradable material a composition as claimed in any of claims 1 to 6.
